# EUROPÄISCHE PATENTSCHRIFT

(11) **EP 2 432 862 B1**
(45) Veröffentlichungstag und Bekanntmachung des Hinweises auf die Patenterteilung: **25.11.2015**
(21) Anmeldenummer: 11727630.3
(22) Anmeldetag: 08.04.2011
(51) Int. Cl.: C11D 3/43, C09D 9/00, C09D 9/04

(54) **VOC- REDUZIERTE, MILDALKALISCHE WÄSSRIGE REINIGUNGSLÖSUNG MIT NICHTIONISCHEN TENSIDEN SOWIE DESSEN KONZENTRAT**
VOC-REDUCED, MILDLY ALKALINE AQUEOUS CLEANING SOLUTION HAVING NON-IONIC SURFACTANTS AND CONCENTRATE THEREOF
SOLUTION AQUEUSE DE NETTOYAGE À ALCALINITÉ MODÉRÉE, À TENEUR RÉDUITE EN VOC, COMPRENANT DES TENSIOACTIFS NON IONIQUES AINSI QUE SON CONCENTRÉ

(30) Priorität: 14.05.2010 DE 102010020489
(43) Veröffentlichungstag der Anmeldung: 28.03.2012
(73) Patentinhaber: Chemische Werke Kluthe GmbH, 69115 Heidelberg (DE)
(72) Erfinder: HESEL, Georg, 68307 Mannheim (DE)
(74) Vertreter: Beyer, Carsten
(86) Internationale Anmeldenummer: PCT/DE2011/000377
(87) Internationale Veröffentlichungsnummer: WO 2011/141010

(56) Entgegenhaltungen:
- EP-A1- 0 503 219
- EP-A1- 1 882 730
- EP-A2- 0 337 576
- US-A1- 2006 089 281
- US-B1- 6 403 546
- DATABASE WPI Week 200319 Thomson Scientific, London, GB; AN 2003-189011 XP000002658721, & JP 2002 338988 A (NEOS KK) 27. November 2002 (2002-11-27)

## Beschreibung

Die vorliegende Erfindung betrifft eine wässrige Reinigungslösung, insbesondere zur Entfernung von nicht ausgehärteten Lackanhaftungen. Des Weiteren betrifft die Erfindung eine Konzentratzusammensetzung zur Bereitstellung einer solchen wässrigen Reinigungslösung.

Wässrige und insbesondere akalische bzw. mildalkalische wässrige Reinigungslösungen sind aus dem Einsatz in Lackierereien bekannt und dienen dort zum Entfernen von frischen, noch nicht ausgehärteten Lackanhaftungen, insbesondere von wasserverdünnbaren Lacken. Hierunter fallen bspw. Basecoats, Füller und Zwei-Komponentenfüller.

Die Anwendung solcher wasserverdünnbarer Lacke erfolgt üblicherweise automatisch in einem kontinuierlichen Spritzlackierprozess bei Raumtemperatur. Bspw. erfolgen bei einem Lackierprozess in einer Karosserielackierstrecke im Automobilbau eine Reihe aufeinander folgender Prozessabschnitte, welche jede Karosserie durchläuft. Füller und Basecoats werden dabei mit Hilfe einer von den Farbvariationen abhängenden Anzahl von Versorgungsleitungen (Ringleitungen) auf die Karosserien appliziert. Die Versorgung der Ringleitungen erfolgt dabei aus zentralen Vorratstanks im Farbmischraum. Der Lack wird üblicherweise mittels einer Zwangsförderung an den Applikationspunkt gefördert. Der Auftrag selber erfolgt häufig mit elektrostatisch aufgeladenen Hochrotationszerstäubern an Dach- und Seitenmaschinen.

An schwer zugänglichen Bereichen werden auch pneumatische Spritzzerstäuber an Robotern oder manuell eingesetzt.

Nach einer gewissen Anzahl lackierter Karosserien und grundsätzlich bei Farbwechseln werden automatisch Spülprogramme mit einem Hydrospüler ausgelöst. Dabei müssen sämtliche Applikationseinrichtungen wie Hochrotationszerstäuber (Glocken), Handpistolen, Spritzzerstäuber, Versorgungsleitungen und, falls vorhanden, elektrostatische Installationen von frischen, noch nicht ausgehärteten Lackanhaftungen befreit werden.

Während des Reinigungsprozesses, welcher lediglich wenige Sekunden andauernde Kontaktzeiten aufweist, muss der Hydrospüler (wässrige Reinigungslösung) die Reinigungsaufgabe mit einem befriedigenden Ergebnis bewerkstelligen. Nur beim Erreichen eines annehmbaren Reinigungsergebnisses werden Kontaminationen der Karosserien mit angetrockneten und sich ablösenden Lackresten oder sogar Farbverschleppungen vermieden.

Für diese Reinigungsaufgabe werden häufig wässrige Reinigungslösungen eingesetzt, die aus flüchtigen organischen Lösungsmitteln und Aminen bestehen oder zumindest einen hohen Anteil dieser Komponenten enthalten. Häufig in der Praxis für Standardprodukte eingesetzte Lösemittel und Amine sind bspw. Butylglykol bzw. Monoethanolamin.

Mit solchen herkömmlichen Produkten kann durchaus ein befriedigendes Reinigungsergebnis erzielt werden. Allerdings liegt dabei die Ansatzkonzentration in der Regel bereits zwischen 10 Massen-% (Ma.-%) und 20 Ma.-%, was einen sehr hohen Einsatz von Rohstoffen mit sich bringt.

Ein weiterer Nachteil der herkömmlich verwendeten Komponenten liegt in ihrem hohen Dampfdruck. Sie gehen teilweise in die Umgebungsluft über und werden daher als flüchtige organische Substanzen (VOC, Volatile Organic Compound) bezeichnet. Als VOC werden dabei gemäß einer verbreiteten Definition organische Verbindungen bezeichnet, die bei 293,15 Kelvin einen Dampfdruck von 0,1 mbar oder mehr aufweisen. Aufgrund der in bekannten alkalischen Reinigungslösungen verwendeten Lösemittel und Amine sowie deren Rezepturanteilen sind diese Produkte zumeist mit den Gefahrensymbolen C (ätzend) oder Xn (gesundheitsschädlich) gekennzeichnet. Damit gehen neben gesundheitlichen, arbeitsphysiologischen und Umweltrisiken insbesondere erhebliche geruchliche Belästigungen bei der Anwendung einher.

Des Weiteren weisen vorgenannte, herkömmliche wässrige Reinigungslösungen oft eine erhöhte Neigung zur Schaumbildung auf, womit ein erhöhter Bedarf an Entschäumern in der Abwasseraufbereitung bzw. Koagulierung einhergeht. Des Weiteren wirken ätzende Bestandteile herkömmlicher alkalischer Reinigungslösungen nachteilig auf hiermit in Kontakt gebrachte Anlagenteile. Mit anderen Worten sind erhöhter Verschleiß durch Angriffe des aggressiven Reinigungsmediums auf die Grundmaterialien der Anlage und Anlagenteile wie Applikationseinrichtungen oder Versorgungsleitungen einzuplanen.

Aus US 2006/0089281 A1 sind Verfahren und Zusammensetzungen zur Entfernung von Farben von Substraten bekannt, vgl. dortiger Absatz [0002]. Die vorgeschlagenen Zusammensetzungen enthalten Tenside, einen Komplexbildner (Sequestriermittel) und ein Lösungsmittel bzw. Weichmacher. Individualisiert offenbarte Beispielzusammensetzungen werden aus zwei Komponentenmischungen sowie Wasser gebildet, wobei eine erste Komponentenmischung insbesondere Komplexbildner (z.B. Kalilauge, Silikat, Gluconat) aufweist, während eine zweite Komponentenmischung u.a. Glykolether, Triethanolamin und Tenside aufweisen kann (vgl. Abs. [0235], [0247]-[0248].

Der vorliegenden Erfindung liegt die Aufgabe zugrunde, eine wässrige Reinigungslösung - und in diesem Zusammenhang auch eine Konzentratzusammensetzung zur Bereitstellung einer solchen Lösung - vorzuschlagen, mit der eine Entfernung von Lackanhaftungen mit hoher Reinigungskraft und -spontanität bei geringerem Rohstoffeinsatz, verbesserter Umweltverträglichkeit und verminderten arbeitsphysiologischen Beeinträchtigungen realisiert ist.

Hinsichtlich einer Konzentratzusammensetzung zur Bereitstellung einer wässrigen Reinigungslösung ist die oben genannte Aufgabe mit den Merkmalen des Anspruchs 1 gelöst. Danach wird eine wasserfreie oder wasserarme Konzentratzusammensetzung vorgeschlagen, welche zur Bereitstellung einer wässrigen Reinigungslösung dient, welche Methyldiethanolamin, zumindest einen Glykolether mit 8-10 C-Atomen und zumindest ein nichtionisches Tensid aufweist, alle in Mengen gemäß Anspruch 1.

Dabei wird auf eine Konzentratzusammensetzung abgezielt, welche sich durch Zugabe von ggf. vollentsalztem Wasser in eine erfindungsgemäße wässrige Reinigungslösung überführen lässt.

Dem Fachmann ist bekannt, dass hier in Rede stehende wässrige Reinigungslösungen oft nicht in anwendungsfertiger Form angeboten werden. Vielmehr handelt es sich verbreitet um wasserfreie oder wasserarme Konzentratzusammensetzungen, welche erst beim Anwender durch Zugabe eines Lösungsmittels, insbesondere von Wasser, in die anwendungsfertige Reinigungslösung überführt werden. Die vorliegende Erfindung bezieht sich ausdrücklich auch auf Konzentratzusammensetzungen, welche durch Zugabe von Wasser und ggf. anderen Lösungsmitteln in eine wässrige Reinigungslösung gemäß vorliegender Erfindung überführbar sind. Die hierzu notwendige zuzugebende Wassermenge kann dabei variieren, wobei Ober- und Untergrenzen durch die beanspruchte Konzentratzusammensetzung jedoch nicht festgelegt werden.

Die Zusammensetzung der im Hinblick auf hervorragende Reinigungswirkung und - spontanität sowie geringe Umwelt- und arbeitsphysiologische Beeinträchtigungen erfindungsgemäßen Konzentratzusammensetzung wird wie folgt angegeben:

| | |
|---|---|
| Methyldiethanolamin: | 15 - 30 Ma.-%, |
| Glykolether mit 8-10 C-Atomen: | 40 - 70 Ma.-%, |
| nichtionische Tenside: | 1 - 30 Ma.-%. |

Dabei kann die erfindungsgemäße Konzentratzusammensetzung in einer zweckmäßigen Ausgestaltung insbesondere folgende nichtionische Tenside aufweisen:

| | |
|---|---|
| Blockpolymer aus Ethylenoxid und Propylenoxid: | 0 - 20 Ma.-%, |
| Fettalkohol, insbesondere mit 10 bis 14 C-Atomen und/oder mit einem Ethoxylierungsgrad von 3 bis 11: | 0 - 5 Ma.-%, |
| Alkylglycosid und/oder Alkylpolyglycosid, insbesondere Glycosid mit mindestens 8 C-Atomen: | 0 - 5 Ma.-%. |

In Bezug auf die Vorteilhaftigkeit des Vorhandenseins obiger Komponenten sowie in Bezug auf deren vorteilhafte Anteile an der Konzentratzusammensetzung wird auf die Ausführungen bezüglich der erfindungsgemäßen wässrigen Reinigungslösung verwiesen.

Die obige Aufgabe ist ferner in Bezug auf eine wässrige Reinigungslösung mit den Merkmalen des Anspruchs 3 gelöst.

Die Mehrzahl der Amine mit 4-6 C-Atomen und Glykolether mit 8-10 C-Atomen weisen im Allgemeinen einen Dampfdruck von weniger als 0,1 mbar bei Raumtemperatur auf und gelten somit als VOC-frei.

Erfindungsgemäß ist gefunden worden, dass eine wässrige Reinigungslösung mit VOC-freien Aminen, VOC-freien Glykolethern und nichtionischen Tensiden in überraschender Weise zumindest die Reinigungskraft und -spontanität herkömmlicher, alkalischer Reinigungslösungen aufweist, welche allerdings Komponenten mit hohen Dampfdrücken aufweisen. So ist zunächst in überraschender Weise eine Reinigungslösung bereitgestellt, welche auf niedermolekulare, aggressiv wirkende und VOChaltige Amine verzichtet, welche nachteilige arbeitsphysiologische Einflüsse entfalten und schädlich auf Anlagenteile sowie die Umwelt wirken.

In erfindungsgemäßer Weise ist es gelungen, VOC-freie Amine mit VOC-freien Glykolethern zu einem hochwirksamen Produkt zu vereinen, ohne gegenüber herkömmlichen Reinigungslösungen verschlechterte Ergebnisse in Kauf nehmen zu müssen. Im Gegenteil ist im Rahmen der Erfindung festgestellt worden, dass der Materialeinsatz innerhalb der erfindungsgemäßen Reinigungslösung gegenüber bisher bekannten Reinigungslösungen stark verringerbar ist. So enthalten bisher bekannte Reinigungslösungen im Allgemeinen Rohstoffanteile von 10 Ma.-% bis 20 Ma.-%, während mit der erfindungsgemäßen Reinigungslösung bereits im Bereich zwischen 1 Ma.-% bis 5 Ma.-% hervorragende Reinigungsergebnisse erzielt werden.

Weiter vorgesehen ist der Einsatz zumindest eines nichtionischen Tensids innerhalb der Reinigungslösung. Im Rahmen der Erfindung ist festgestellt worden, dass mit anionischen Tensiden eine unerwünscht hohe Schaumbildung einhergehen kann. Bei der Verwendung kationischer Tenside können auf der anderen Seite unerwünschte Wechselwirkungen mit dem Lackmaterial eintreten. Mit der Verwendung nichtionischer Tenside sind diese Nachteile überwunden worden.

Die erfindungsgemäße Reinigungslösung schont die Grundmaterialien der Anlage bzw. der Anlagenteile. Es findet aufgrund des fehlenden Vorhandenseins ätzender Komponenten kein signifikanter Angriff auf die Anlagenteile statt. Dadurch wird der Verschleiß minimiert und die Lackiererei wird langfristig funktionsfähig gehalten.

Durch die Verwendung VOC-freier Komponenten ist die Geruchsbelästigung durch die erfindungsgemäße Reinigungslösung drastisch reduziert. Damit kann ein hochwirksames und gleichzeitig VOC-freies Produkt bereitgestellt werden. Die vorgeschlagene Reinigungslösung enthält wenige oder keine leichtflüchtigen organischen Substanzen mehr und ist damit sehr geruchsarm oder sogar praktisch geruchsfrei. Die Lösung ist damit höchstens als Xi (reizend) einzustufen und entspricht der EG-Detergentienverordnung Nr. 648/2004. Damit gilt die Reinigungslösung als biologisch abbaubar.

Die durch die Verwendung nichtionischer Tenside erzielte Schaumdämpfung ist vorteilhaft bei der Anwendung und insbesondere bei der Abwasserbehandlung.

Schließlich ist die erfindungsgemäße Reinigungslösung auch mit allen in der Lackiererei und der Abwasserbehandlung bzw. Koagulierung bekannten und verwendeten Chemikalien verträglich.

Folglich ist mit der erfindungsgemäßen wässrigen Reinigungslösung die Entfernung von Lackanhaftungen mit hoher Reinigungskraft und -spontanität bei geringerem Rohstoffeinsatz, verbesserter Umweltverträglichkeit und verminderten arbeitsphysiologischen Beeinträchtigungen realisiert.

Wie bereits erwähnt, ist die Verwendung nicht flüchtiger (VOC-freier) Amine bevorzugt. In diesem Zusammenhang ist erfindungsgemäß die Verwendung von Methyldiethanolamin vorgesehen.

Im Hinblick auf die Dosierung des Amins bzw. der Amine hat sich innerhalb einer bevorzugten Ausgestaltung des Erfindungsgedankens ein Gehalt an Aminen von 0,01 Massen-% (Ma.-%) bis 4 Ma.-%, insbesondere von 0,25 Ma.-% bis 2 Ma.-%, als besonders vorteilhaft herausgestellt.

Als VOC-freie und für die erfindungsgemäße Reinigungslösung besonders geeignete Glykolether werden 2-(2-Butoxyethoxy)-ethanol (Butyldiglykol), 2-Hexoxy-1-ethanol (Hexylglykol), 2-(2-Hexyloxyethoxy)-ethanol (Hexyldiglykol), oder eine Mischung hiervon, vorgeschlagen. Die genannten Glykolether weisen bei Raumtemperatur einen Dampfdruck von weniger als 0,1 mbar auf und gelten somit als VOC-frei.

Im Hinblick auf die Dosierung von Glykolether hat sich innerhalb einer weiteren bevorzugten Ausgestaltung der Erfindung ein Gehalt an Glykolethern von 0,1 Ma.-% bis 6 Ma.-%, insbesondere von 0,15 Ma.-% bis 4,5 Ma.-%, als besonders zweckmäßig erwiesen.

Gemäß einer weiteren Ausführungsform wird die Verwendung zumindest zweier VOC-freier Glykolether in einer Mischung vorgeschlagen. Demgemäß weist die Lösung 0,1 Ma.-% bis 4,5 Ma.-% eines ersten Glykolethers mit 8-10 C-Atomen, insbesondere Butyldiglykol, und 0,05 Ma.-% bis 1,5 Ma.-% eines zweiten Glykolethers mit 8-10 C-Atomen, insbesondere 2-Hexylglykol oder Hexyldiglykol, auf. Mit einem vergleichsweise höheren Anteil von Butyldiglykol und einer geringeren Zugabe von Hexylglykol bzw. Hexyldiglykol sind demgemäß hervorragende Ergebnisse erzielt worden. Selbstverständlich können auch weitere Glykolether mit 8-10 C-Atomen in der Reinigungslösung vorhanden sein, ohne den Rahmen der Erfindung zu verlassen. So kann wahlweise auch eine Mischung der drei vorgenannten Glykolether vorgesehen werden.

In einer weiteren zweckmäßigen Ausgestaltung des Erfindungsgedankens weist die Reinigungslösung einen Gehalt an nichtionischen Tensiden von 0,01 Ma.-% bis 8 Ma.-% auf. Dabei kommen ganz allgemein sämtliche nichtionischen Tenside in Frage, welche eine gute Reinigungswirkung und -spontanität bei gleichzeitig geringer Schäumungsneigung bereitstellen.

Insbesondere wird jedoch gemäß einer weiteren Ausgestaltung die Verwendung eines Blockpolymers aus Ethylenoxid und Propylenoxid vorgeschlagen, insbesondere wobei der Anteil solcher Blockpolymere 0,01 Ma.-% bis 4 Ma.-% an der Lösung beträgt.

Alternativ oder zusätzlich kann die wässrige Reinigungslösung als nichtionisches Tensid in vorteilhafter Weise einen Fettalkohol, insbesondere einen Fettalkohol mit 10-14 C-Atomen und/oder mit einem Ethoxylierungsgrad von 3-11, und insbesondere mit einem Anteil von 0,01 Ma.-% bis 2 Ma.-% an der Lösung, aufweisen.

In einer weiteren bevorzugten Ausführungsform weist die wässrige Reinigungslösung als Tensid alternativ oder zusätzlich ein Alkylglycosid und/oder ein Alkylpolyglycosid auf, und zwar insbesondere ein Glycosid mit mindestens 8 C-Atomen, wobei der Glycosidanteil an der Reinigungslösung bevorzugt 0,01 Ma.-% bis 2 Ma.-% betragen kann.

### Beispiel

Im Rahmen zweier Versuchsreihen ist die Lackverträglichkeit sowie die Reinigungswirkung einer erfindungsgemäßen wässrigen Reinigungslösung untersucht worden.

Dazu wurde eine erfindungsgemäße Konzentratzusammensetzung (Beispiel 1) hergestellt, deren Zusammensetzung Tabelle 1 zu entnehmen ist. Als Vergleich diente die Konzentratzusammensetzung eines nicht erfindungsgemäßen Standardprodukts.

**Tabelle 1: Zusammensetzungen (in Massen-%) eines erfindungsgemäßen Konzentrats (Beispiel 1) sowie eines nicht erfindungsgemäßen Vergleichsbeispiels (Standardprodukt) für die durchgeführten Versuchsreihen. 2-Butoxyethanol ist Butylglykol, 2-(2-Butoxyethoxy)-ethanol ist Butyldiglykol.**

| Komponenten | Beispiel 1 | Vergleichsbeispiel |
|---|---|---|
| Monoethanolamin | - | 10 |
| Methyldiethanolamin | 25 | - |
| 2-Butoxyethanol | - | 80 |
| 2-(2-Butoxyethoxy)-ethanol | 45 | - |
| weiterer Glykolether mit 8-10 C-Atomen | 10 | - |
| Blockpolymer aus Ethylen- und Propylenoxid | 15 | - |
| C10-14-Fettalkohol x 3-11 Ethylenoxid | 2,5 | - |
| Alkyl(poly)glycosid | 2,5 | - |
| vollentsalztes Wasser | - | 10 |

Zur Durchführung der Versuchsreihen wurde aus der erfindungsgemäßen Konzentratzusammensetzung eine anwendungsfertige Reinigungslösung mit 2 Ma.-% des Konzentrats sowie aus der Konzentratzusammensetzung des Standardprodukts eine Reinigungslösung mit 10 Ma.-% des Konzentrats hergestellt und untersucht.

### Versuch 1

Versuch 1 diente der Überprüfung der Lackverträglichkeit der erfindungsgemäßen wässrigen Reinigungslösung. Dabei sollten insbesondere Rohstoffe und Reinigungslösungen auf mögliche Unverträglichkeiten untersucht werden, bspw. auf Kraterbildung mit verwendeten Lacken.

Dazu sind saubere, unlackierte Stahlbleche im A5-Format viermal mit der zu untersuchenden Reinigungslösung abgespült und zwischen den Spülvorgängen in waagrechter Lage getrocknet worden. Die Trocknung wurde dabei im Umluftofen bei 50°C beschleunigt.

Danach wurden die getrockneten Versuchsbleche mit herkömmlichen, in der Auto-mobilindustrie verwendeten Lacken lackiert.

Nach Abtrocknung der Lackschicht wurden die lackierten Versuchsbleche bei guter Beleuchtung (Tageslicht bzw. Neonbeleuchtung) optisch untersucht. Sollten dabei Krater oder andere Unverträglichkeiten festgestellt werden, wäre die Prüfung zu wiederholen. Würden auch bei einer zweiten Prüfung Krater auftreten, wäre die Reinigungslösung für diese Reinigungsaufgabe ungeeignet.

Das Ergebnis zu Versuch 1 zeigte jedoch, dass die aus dem Beispielkonzentrat 1 und dem Vergleichskonzentrat hergestellten Reinigungslösungen mit 2 Ma.-% bzw. 10 Ma.-% Anteil des Konzentrats an der jeweiligen Lösung keine Lackstörungen zeigten und daher mit standardmäßig eingesetzten Lacken verträglich sind.

### Versuch 2

In der zweiten Versuchsreihe ist die Reinigungswirkung der erfindungsgemäßen Reinigungslösung aus dem Konzentrat gemäß Beispiel 1 im Vergleich zu derjenigen gemäß Vergleichbeispiel untersucht worden. Um zur Beurteilung der Lösekraft für Lackanhaftungen gleiche Versuchsbedingungen vorzugeben und innerhalb einer Versuchsreihe Ergebnisse vergleichen zu können, ist dabei wie folgt verfahren worden.

Die Lösefähigkeit der untersuchten Reinigungslösungen ist mit Hilfe einer speziell konzipierten Apparatur geprüft worden. Die Apparatur besteht aus
- einem Gestell,
- Klemmvorrichtungen,
- zwei bis drei Büretten mit Hahn,
- einer etwa 20 cm breiten und etwa 60 cm langen Glasscheibe, und
- einer Auffangvorrichtung.

Die Büretten sind mit Hilfe der Klemmvorrichtungen senkrecht befestigt worden. Dabei wurden die Büretten so justiert, dass der Abstand vom Bürettenhahn zu der Aufprallstelle auf der Glasscheibe exakt 100 mm betrug. Die Büretten sind mit der zu prüfenden Reinigungslösung befüllt worden. Die Glasscheibe hat dabei in einem Winkel von 45° im Gestell aufgelegen.

Der verarbeitungsfertig eingestellte Lack ist dann vorsichtig mit einer Schichtstärke von 30 µm auf die Glasscheibe aufgerakelt worden, wobei die Glasscheibe im Bereich der Tropf- bzw. Aufprallstelle in einem ca. 6 cm - ca. 8 cm breiten Streifen beschichtet worden ist.

Nach einer Wartezeit von 30 Sekunden wurde die Reinigungslösung auf die mit dem Lack versehene Stelle der Glasscheibe getropft, wobei die Tropffrequenz ca. 1 Tropfen pro Sekunde betragen hat. Im Rahmen des Versuchs wurde die Anzahl der Tropfen bis zur vollständigen Ablösung des frischen Lacks an der Tropf- bzw. Aufprallstelle bestimmt.

Die mit der zweiten Versuchsreihe erhaltenen Ergebnisse sind Tabelle 2 zu entnehmen. Die Anzahl der Tropfen, die bis zur Ablösung des Lackes benötigt wurden, steht dabei im umgekehrten Verhältnis zur Lösekraft der jeweiligen Reinigungslösung.

**Tabelle 2: Ergebnisse der zweiten Versuchsreihe. Verglichen wird die Lösekraft für Lacke einer 2 Ma.-%-igen Lösung der Konzentratzusammensetzung gemäß Beispiel 1 und einer 10 Ma.-%-igen Lösung der Zusammensetzung gemäß Vergleichsbeispiel (Standardprodukt).**

| Standard-Basecoat, Trockenzeit 30 sec | Beispiel 1 | Vergleichsbeispiel |
|---|---|---|
| Konzentration (Ma.-%) | 2 | 10 |
| benötigte Tropfenzahl | 6 Tropfen | 6 Tropfen |

Die Ergebnisse der zweiten Versuchsreihe zeigen, dass im Vergleich zu dem Standardprodukt bereits 1/5 des Rohstoffeinsatzes für die anwendungsfertige Reinigungslösung ausreicht, um mit der erfindungsgemäßen Reinigungslösung zumindest dasselbe Reinigungsergebnis wie mit dem Standardprodukt zu erzielen.

Im Ergebnis belegt Versuch 1 die Praxistauglichkeit und Verträglichkeit der erfindungsgemäßen Reinigungslösung. Versuch 2 zeigt eindrucksvoll, dass eine Reinigungslösung mit erfindungsgemäßer Zusammensetzung trotz Verzicht auf VOChaltige Komponenten und unter Verwendung nichtionischer Tenside bereits mit einem Bruchteil (1/5) des Konzentratanteils innerhalb der anwendungsfertigen Reinigungslösung die Reinigungsgüte und -spontanität eines bisher bekannten Standardprodukts erreicht.

Beide durchgeführten. Versuche sind praxisgerecht und praxisrelevant. Die Reinigungslösung aus dem Konzentrat gemäß Beispiel 1 besteht dabei beide Tests und erweist sich als praxistauglich.

Abschließend sei betont, dass das vorstehend erläuterte Beispiel die erfindungsgemäße Lehre erörtert, diese jedoch nicht auf das Beispiel einschränkt.

## Patentansprüche

1. Konzentratzusammensetzung, nämlich wasserfreie oder wasserarme Zusammensetzung, zur Bereitstellung, durch die Zugabe von - ggf. vollentsalztem - Wasser,
einer wässrigen Reinigungslösung, insbesondere zur Entfernung von nicht ausgehärteten Lackanhaftungen, welche Methyldiethanolamin, zumindest einen Glykolether mit 8-10 C-Atomen, und zumindest ein nichtionisches Tensid aufweist,
wobei die Zusammensetzung folgende Komponenten aufweist:
| | |
|---|---|
| Methyldiethanolamin: | 15 - 30 Ma.-%, |
| Glykolether mit 8 - 10 C-Atomen: | 40 - 70 Ma.-%, |
| nichtionische Tenside: | 1 - 30 Ma.-%. |

2. Konzentratzusammensetzung nach Anspruch 1, **dadurch gekennzeichnet, dass** die Zusammensetzung als nichtionische Tenside aufweist:
| | |
|---|---|
| Blockpolymer aus Ethylenoxid und Propylenoxid: | 0 - 20 Ma.-%, |
| Fettalkohol, insbesondere mit 10 bis 14 C-Atomen und/oder mit einem Ethoxylierungsgrad von 3 bis 11: | 0 - 5 Ma.-%, |
| Alkylglycosid und/oder Alkylpolyglycosid, insbesondere Glycosid mit mindestens 8 C-Atomen: | 0 - 5 Ma.-%. |

3. Wässrige Reinigungslösung, bereitgestellt durch die Zugabe von Wasser zu einer Konzentratzusammensetzung nach Anspruch 1 oder 2.

4. Wässrige Reinigungslösung nach Anspruch 3, **gekennzeichnet durch** einen Gehalt an Aminen von 0,01 Massen-% (Ma.-%) bis 4 Ma.-%, insbesondere von 0,25 Ma.-% bis 2 Ma.-%.

5. Wässrige Reinigungslösung nach Anspruch 3 oder 4, **dadurch gekennzeichnet, dass** die Lösung VOC-freie Glykolether, insbesondere Butyldiglykol (2-(2-Butoxyethoxy)-ethanol), Hexylglykol (2-Hexoxy-1-ethanol), Hexyldiglykol (2-(2-Hexyloxyethoxy)-ethanol), oder eine Mischung hiervon, aufweist.

6. Wässrige Reinigungslösung nach einem der Ansprüche 3 oder 5, **gekennzeichnet durch** einen Gehalt an Glykolethern von 0,1 Ma.-% bis 6 Ma.-%, insbesondere von 0,15 Ma.-% bis 4,5 Ma.-%.

7. Wässrige Reinigungslösung nach einem der Ansprüche 3, 5, 6, **dadurch gekennzeichnet, dass** die Lösung 0,1 Ma.-% bis 4,5 Ma.-% eines ersten Glykolethers mit 8-10 C-Atomen, insbesondere Butyldiglykol, und 0,05 Ma.-% bis 1,5 Ma.-% eines zweiten Glykolethers mit 8-10 C-Atomen, insbesondere Hexylglykol oder Hexyldiglykol, aufweist.

8. Wässrige Reinigungslösung nach einem der Ansprüche 3 oder 5 **gekennzeichnet durch** einen Gehalt an nichtionischen Tensiden von 0,01 Ma.-% bis 8 Ma.-%.

9. Wässrige Reinigungslösung nacn Anspruch 8, **dadurch gekennzeichnet, dass** die Lösung ein Blockpolymer aus Ethylenoxid und Propylenoxid, insbesondere mit einem Anteil von 0,01 Ma.-% bis 4 Ma.-% an der Lösung, aufweist.

10. Wässrige Reinigungslösung nach einem der Ansprüche 8 bis 9, **dadurch gekennzeichnet, dass** die Lösung einen Fettalkohol, insbesondere einen Fettalkohol mit 10 bis 14 C-Atomen und/oder mit einem Ethoxylierungsgrad von 3 bis 11, und insbesondere mit einem Anteil von 0,01 Ma.-% bis 2 Ma.-% an der Lösung, aufweist.

11. Wässrige Reinigungslösung nach einem der Ansprüche 8 bis 10, **dadurch gekennzeichnet, dass** die Lösung ein Alkylglycosid und/oder ein Alkylpolyglycosid, insbesondere ein Glycosid mit mindestens 8 C-Atomen, und insbesondere mit einem Glycosidanteil von 0,01 Ma.-% bis 2 Ma.-% an der Lösung, aufweist.

## Claims

1. Concentrate composition , namely water-free or low-water composition, for providing, by adding - fully desalinated, if required - water,
an aqueous cleansing solution, particularly for the removal of non-cured paint adhesions, which comprises methyl diethanolamine, at least one glycol ether having 8 - 10 C-atoms, and at least one non-ionic tenside,
wherein the composition comprises the following components:
| | |
|---|---|
| methyl diethanolamine: | 15 - 30 wt %, |
| glycol ether having 8 - 10 C-atoms: | 40 - 70 wt %, |
| non-ionic tensides: | 1 - 30 wt %. |

2. Concentrate composition according to claim 1, **characterized in that** the composition comprises as non-ionic tensides:
| | |
|---|---|
| block polymer of ethylene oxide and propylene oxide: | 0 - 20 wt %, |
| fatty alcohol, in particular having 10 - 14 C-atoms and/or with an ethoxylation grade of 3 to 11: | 0 - 5 wt %, |
| alkyl glycoside and/or alkyl polyglycoside, particularly glycoside having at least 8 C-atoms: | 0 - 5 wt %. |

3. Aqueous cleansing solution, provided by adding water to a concentration composition according to claim 1 or 2.

4. Aqueous cleansing solution according to claim 3, **characterized by** an amine content of 0.01 weight-% (wt %) to 4 wt %, in particular 0.25 wt % to 2 wt %.

5. Aqueous cleansing solution according to claim 3 or 4, **characterized in that** the solution comprises VOC-free glycol ethers, particularly butyl diglycol (2-(2-butoxyethoxy) ethanol), hexyl glycol (2-hexoxy-1-ethanol), hexyldiglycol (2-(2-hexyloxyethoxy) ethanol, or a mixture thereof.

6. Aqueous cleansing solution according to one of the claims 3 or 5,
**characterized by** a content of glycol ethers of 0.1 wt % to 6 wt %, in particular 0.15 wt % to 4.5 wt %.

7. Aqueous cleansing solution according to one of the claims 3, 5, 6, **characterized in that** the solution comprises 0.1 wt % to 4.5 wt % of a first glycol ether having 8 -10 C-atoms, in particular butyl diglycol, and 0.05 wt % to 1.5 wt % of a second glycol ether having 8 -10 C-atoms, particularly hexylglycol or hexyldiglycol.

8. Aqueous cleansing solution according to one of the claims 3 or 5, **characterized by** a content of non-ionic tensides of 0.01 wt % to 8 wt %.

9. Aqueous cleansing solution according to claim 8, **characterized in that** the solution comprises a block polymer of ethylene oxide and propylene oxide, in particular with a content of 0.01 wt % to 4 wt % of the solution.

10. Aqueous cleansing solution according to one of the claims 8 to 9, **characterized in that** the solution comprises a fatty alcohol, in particular a fatty alcohol having 10 to 14 C-atoms and/or with an ethoxylation grade of 3 to 11, and in particular with a content of 0.01 wt % to 2 wt % of the solution.

11. Aqueous cleansing solution according to one of the claims 8 to 10, **characterized in that** the solution comprises an alkyl glycoside and/or an alkyl polyglycoside, in particular a glycoside having at least 8 C-atoms, and in particular with a glycoside content of 0.01 wt % to 2 wt % of the solution.

## Revendications

1. Composition du concentré, à savoir composition sans eau ou pauvre en eau, pour préparation, par ajout d'eau - le cas échéant entièrement dessalée,
d'une solution de nettoyage aqueuse, en particulier pour l'élimination d'apprêts adhérents pour peintures non durcies, qui comportent de la méthyldiéthanolamine, au moins un glycoléther à 8 - 10 atomes C, et au moins un agent tensioactif non ionique, auquel cas la composition aurait les éléments suivants :
| | |
|---|---|
| méthyldiéthanolamine: | 15 - 30 ma.-%, |
| glycoléther à 8 - 10 atomes C : | 40 - 70 ma.-%, |
| agents tensioactifs non ionique : | 1 - 30 ma.-%. |

2. Composition du concentré selon la revendication 1, **caractérisée par le fait que** la composition comporte comme agents tensioactifs non ioniques :
| | |
|---|---|
| Copolymère séquence d'oxyde d'éthylène et d'oxyde de propylène : | 0 - 20 ma.-%, |
| alcool gras, en particulier avec 10 à 14 atomes C et/ou avec un degré d'éthoxylation de 3 à 11 : | 0 - 5 ma.-%, |
| glycoside alkylique et / ou alkylpolyglycoside, en particulier glycoside avec au moins 8 atomes C : | 0 - 5 ma.-%. |

3. Solution de nettoyage aqueuse, préparé par l'adjonction d'eau à une composition du concentré selon la revendication 1 ou 2.

4. Solution de nettoyage aqueuse selon la revendication 3, **caractérisée par** une teneur en amine de 0,01 masse-% (ma.-%) jusqu'à 4 ma.-%, en particulier de 0,25 ma.-% à 2 ma.-%.

5. Solution de nettoyage aqueuse selon la revendication 3 ou 4, **caractérisée par le fait que** la solution comporte des éthers de glycol sans VOC, en particulier du butyldiglycol (2-(2-butoxyéthoxy)-éthanol), glycol hexyl (2-hexoxy-1-éthanol), diglycol hexyl (2-(2-hexyloxyéthoxy)-éthanol), ou un mélange de ceux-ci.

6. Solution de nettoyage aqueuse selon une des revendications 3 ou 5, **caractérisées par** une teneur en glycoléther de 0,1 ma.-% à 6 ma.-%, en particulier de 0,15 ma.-% à 4,5 ma.-%.

7. Solution de nettoyage aqueuse selon une des revendications 3, 5, 6, **caractérisée par le fait que** la solution comporte 0,1 à 4,5 ma.-% d'un premier glycoléther à 8 - 10 atomes C, en particulier butyldiglycol, et 0,05 ma.-% à 1,5 ma.-% d'un second glycoléther à 8 - 10 atomes C, en particulier glycol hexyl ou diglycol hexyl.

8. Solution de nettoyage aqueuse selon une des revendications 3 ou 5, **caractérisée par** une teneur en tensioactifs non ioniques de 0,01 ma.-% à 8 ma.-%.

9. Solution de nettoyage aqueuse selon la revendication 8, **caractérisée par le fait que** la solution comporte un polymère séquence d'oxyde d'éthylène et d'oxyde de propylène, en particulier avec une part de 0,01 ma.-% à 4 ma. % dans la solution.

10. Solution de nettoyage aqueuse selon une des revendications 8 à 9, **caractérisée par le fait que** la solution comporte un alcool gras, en particulier un alcool gras avec 10 à 14 atomes C et/ou un degré d'éthoxylation de 3 à 11, et en particulier avec une part de 0,01 ma. -% à 2 ma.-% dans la solution.

11. Solution de nettoyage aqueuse selon une des revendications 8 à 10, **caractérisée par le fait que** la solution comporte un glycoside alkylique et / ou un polyglycoside alkylique, en particulier un glycoside à au moins 8 atomes C, et en particulier avec une part de glycoside de 0,01 ma.-% à 2 ma. % dans la solution.
